# EUROPÄISCHE PATENTSCHRIFT

(11) **EP 2 047 344 B1**
(45) Veröffentlichungstag und Bekanntmachung des Hinweises auf die Patenterteilung: **31.03.2010**
(21) Anmeldenummer: 07786310.8
(22) Anmeldetag: 25.07.2007
(51) Int. Cl.: G05B 19/4061

(54) **KAMERABASIERTE ÜBERWACHUNG VON MASCHINEN MIT BEWEGLICHEN MASCHINENELEMENTEN ZUR KOLLISIONSVERHINDERUNG**
CAMERA-BASED MONITORING OF MACHINES WITH MOVING MACHINE ELEMENTS FOR THE PURPOSE OF COLLISION PREVENTION
SURVEILLANCE À BASE DE CAMÉRA DE MACHINES COMPORTANT DES ÉLÉMENTS DE MACHINE MOBILES EN VUE D'ÉVITER LES COLLISIONS

(30) Priorität: 31.07.2006 DE 102006035934; 10.10.2006 DE 102006048163
(43) Veröffentlichungstag der Anmeldung: 15.04.2009
(73) Patentinhaber: Pilz GmbH & Co. KG, 73760 Ostfildern (DE)
(72) Erfinder: FRANKE, Andre, 44137 Dortmund (DE); KRUEGER, Lars, 89073 Ulm (DE); WOEHLER, Christian, 72535 Heroldstatt (DE)
(74) Vertreter: Witte, Weller & Partner
(86) Internationale Anmeldenummer: PCT/EP2007/006584
(87) Internationale Veröffentlichungsnummer: WO 2008/014909

(56) Entgegenhaltungen:
- WO-A-2004/029659
- DE-A1- 10 226 140
- DE-A1- 10 324 627

## Beschreibung

Die Erfindung betrifft ein Verfahren und eine Vorrichtung zur kamerabasierten Überwachung bewegter Maschinen mit beweglichen Maschinenelementen zur Kollisionsverhinderung nach den Oberbegriffen der Patentansprüche 1 und 14.

Bei modernen Industrierobotern, die sich mit erheblichen Geschwindigkeiten bewegen, führen Kollisionen in der Regel zu ernsthaften Schäden, sowohl an den Robotern als auch an den von diesen gehandhabten Werkstücken. Dies kann zu kostspieligen Produktionsausfällen führen. Auch hat die Sicherheit von Personen, welche mit den automatisiert arbeitenden Robotern interagieren, höchste Priorität. Bei modernen Industrierobotern und anderen Maschinen mit bewegten Maschinenelementen, deren Bewegung eine Gefahr für Personen und andere Objekte darstellen, muss deshalb durch Schutzeinrichtungen verhindern werden, dass es zu einer Kollision zwischen dem bewegten Maschinenelement und dem Objekt kommt. Dazu ist es meist ausreichend, die Maschine zum Stillstand zu bringen, bevor ein ungewollter Kontakt erfolgt. Die Zeit vom Abschaltbefehl bis zum Stillstand wird Anhaltezeit genannt und bestimmt den einzuhaltenden Abstand.

Aus dem Stand der Technik sind verschiedene Sensoren und Auswertemethoden zur Absicherung bewegter Maschinenteile bekannt. Die einfachste Möglichkeit besteht darin, die Maschine mit einem feste Zaun zu umgeben, dessen Zugang (z.B.: Tür) mit Sensoren so gekoppelt ist, dass bei dessen Nutzung die Maschine angehalten wird. Bei ausreichendem Abstand des Zugangs zur bewegten Maschine ist diese dann bereits zum Stillstand gekommen, bevor eine Person mit ihr in Kontakt kommen kann.

Lichtschranken und -gitter, welche im Raum um eine bewegte Maschine angeordnet werden und bei Unterbrechung eines Lichtstrahls ein Abschaltsignal an die Maschine weiterleiten, sind zwar weit verbreitet, jedoch ist der konstruktive Aufwand relativ hoch, da die Lichtsender und Sensoren genau aufeinander ausgerichtet werden müssen.

In der deutschen Offenlegungsschrift DE 103 58 770 A1 wird ein Sicherheitssystem beschrieben, bei welchem eine Maschine und deren Umfeld von einem System aus mehreren Kameras beobachtet werden. Aus synchron aufgenommenen Bildern kann die räumliche Position von Objektpunkten im Raum durch Triangulation bestimmt werden. Finden sich genügend Punkte in einem vorher definierten Volumen, kann die Maschine abgeschaltet werden. Im Gegensatz zur Verwendung von Lichtschranken und -gitter können so quasi beliebige Volumina überwacht werden. Solche Volumina sind allerdings statisch und können lediglich programmgesteuert aktiviert oder deaktiviert werden.

Um den Abstand zwischen einer Person und einer bewegten Maschine flexibel zu gestalten, wird in der deutschen Offenlegungsschrift DE 102 26 140 A1 vorgeschlagen, die Anhaltezeit für eine Roboterbewegung auf Grundlage gegenwärtiger und früherer Gelenkstellungen und Gelenkgeschwindigkeiten für jedes einzelne Robotergelenk zu bestimmen und hieraus eine Vorhersage bezüglich der Konfiguration einer Bewegungsbahn des Roboters während der Anhaltezeit herzuleiten. Bei der Herleitung der Bewegungsbahn im Zeitraum der Anhaltezeit werden auch Kenntnisse über maximale Geschwindigkeit und maximale negative Beschleunigung der bewegten Maschinenkomponenten herangezogen. Um trotz der üblicherweise großen Anzahl von zu beachtenden Parametern eine Echtzeitfähigkeit des System zu erreichen, wird vorgeschlagen die Ermittlung der aktuellen Anhaltezeit und somit des aktuellen Anhalteweges mittels eines neuronalen Netzes vorzunehmen. Die Abstände zwischen den beweglichen Teilen des Roboters und Personen/Objekten in seiner Umgebung werden mittels Sensoren erfasst und mit den ermittelten Anhaltezeiten bzw. -wegen korreliert, so dass dann bei Kollisionsgefahr eine Abschaltsignal erzeugt wird.

Ein weiteres Sicherheitssystem für eine automatisiert arbeitenden Maschine beschreibt die deutsche Offenlegungsschrift DE 103 24 627 A1. Dabei werden die um die Maschine definierten und durch an der Maschine angebrachte Sensoren überwachten Sicherheitszonen an das bekannte augenblickliche und zukünftige Bewegungsverhalten angepasst. Im Falle des Eintritts einer Person in eine der Sicherheitszonen wird aus deren Blickrichtung oder aus deren Bewegungsverhalten geschätzt, ob ein gewollter oder eine ungewollter Eintritt in eine Sicherheitszone vorliegt. Im Falle eines gewollten Eintritts, der meist mit einer geplanten Interaktion der Person mit der Arbeitsmaschine in Einklang steht, werden die Sicherheitszonen modifiziert,.

Um jederzeit die korrekte Anhaltezeit bzw. Dimension der Sicherheitszonen schätzen zu können, ist es bei den aus dem Stand der Technik bekannten Verfahren notwendig, auf von der Maschine bzw. deren Steuerprogramm zur Verfügung gestellte Daten zurückzugreifen. Dies ist nur möglich, wenn die Maschine eine geeignete Datenschnittstelle zur Verfügung stellt, über die alle zur dynamischen Absicherung der Maschine benötigten Daten erhältlich sind. Häufig ist eine solche Schnittstelle jedoch nicht vorhanden.

Ausgehend von dem bekannten Stand der Technik ist es eine Aufgabe der Erfindung, ein Verfahren und eine Vorrichtung zur kollisionsfreien Interaktion zwischen einer Maschine mit beweglichen Maschinenelementen und Objekten in deren Umfeld anzugeben, welche auch ohne eine vollständige Datenübermittlung durch die Maschine und deren Steuerprogramm arbeiten können.

Die Lösung der Aufgabe wird durch ein Verfahren und eine Vorrichtung nach den Patentansprüchen 1 und 14 erreicht. Vorteilhafte Ausgestaltungen und Weiterbildungen der Erfindung sind in den Unteransprüchen beschrieben.

Bei dem neuen Verfahren zur kollisionsfreien Interaktion zwischen einer Maschine und sich in deren Umfeld befindlichen Objekten, wird auf die Kenntnis der aktuellen Position und des dynamischen Verhaltens der Maschine zurückgegriffen. Diese Kenntnis sowie das Wissen über die Zeitdauer von einer Abschaltung bis zum Stillstand der Maschinenelemente (Anhaltezeit) wird dazu verwendet, um zukünftige, innerhalb dieser Anhaltezeit erreichbare Positionen der beweglichen Maschinenelemente zu schätzen. Beispielsweise beträgt bei üblichen Standard-Industrierobotern die maximale Geschwindigkeit und die maximale negative Beschleunigung des ersten Gelenkes typischerweise 240 Grad/s bzw. 880 Grad/s², woraus sich ein Anhaltewinkel bei maximaler Geschwindigkeit von etwa 33 Grad ergibt.

Ausgehend von dieser Schätzung, wird dann die Größe von Sicherheitsbereichen um die Maschine und/oder die beweglichen Maschinenelemente festgelegt. Diese Sicherheitsbereiche werden mit Hilfe von Sensoren hinsichtlich des Eintritts eines Objektes überwacht. Resultiert diese Überwachung wenigstens eines der Sicherheitsbereiche in der Detektion eines dort eintretenden Objektes, wird auf die Steuerung der Maschine und/oder des beweglichen Maschinenelementes derart eingewirkt, dass das bewegliche Maschinenelement in seinem dynamischen Bewegungsverhalten beeinflusst wird.

In vorteilhafter Weise werden dabei Bilddaten der beweglichen Maschinenelemente mittels eines Bilderfassungssystems erfasst. Diese Bilddaten werden mit einer Datenbasis korreliert, welche in einer Trainingsphase mit Bilddaten der Maschine und/oder des wenigstens einen beweglichen Maschinenelementes erstellt wurde. In besonderer Weise umfasst die Datenbasis sowohl Bilddaten zu einer Vielzahl von Bewegungsphasen innerhalb des Bewegungsablaufes der beweglichen Maschinenelemente, als auch über den dynamischen Zusammenhang dieser Vielzahl von Bewegungsphasen. Im Rahmen der Korrelation der aktuell erfassten Bilddaten mit dieser Datenbasis wird sowohl die aktuelle Position von beweglichen Maschinenelementen ermittelt, als auch zukünftige, innerhalb der Anhaltezeit erreichbare Positionen der beweglichen Maschinenelemente geschätzt.

Durch die Bestimmung der aktuellen und zukünftigen Positionen aus mittels Bildsensoren aufgenommenem Daten und deren Korrelation mit einer entsprechenden Datenbasis, wird in vorteilhafter Weise eine Unabhängigkeit von durch die Maschine bzw. deren Steuerung zu liefernden Informationen erreicht. Ein mittels des erfindungsgemäßen Verfahrens arbeitende Vorrichtung ist deshalb in der Lage, eine Maschine mit beweglichen Maschinenelementen zu überwachen, auch wenn die von der Maschine bereitgestellten Daten für sich genommen nicht ausreichend sind. Das Verfahren ist somit bei verschiedenen Maschinen flexibel einsetzbar. Das Verfahren und die neue Vorrichtung können nach einer kurzen Trainingsphase, bei welcher durch Beobachtung des Bewegungsablaufes eines beweglichen Maschinenelementes eine Datenbasis erzeugt wurde, zur Kollisionsüberwachung jeglicher Art von Maschinen unabhängig von deren Steuerprogramm (egal ob softwaretechnisch oder hardwaretechnisch realisiert) eingesetzt werden.

Bevorzugt werden die Bilddaten mit Hilfe eines multiokularen Kamerasystems erfasst. Vorteilhaft besitzt dieses Kamerasystem eine definierte Stereobasis, die es ermöglicht, Entfernungen zwischen dem Kamerasystem und einzelnen Objektpunkten im Raum mit Hilfe von stereoskopischen Auswerteverfahren zu bestimmen.

Um eine zur Positionsbestimmung und zur Schätzung zukünftiger Positionen geeignete Datenbasis zu schaffen, sollten in einer Trainingsphase vom Bewegungsablauf der Maschine bzw. eines beweglichen Maschinenelementes Bilddaten möglichst vieler Bewegungsphasen abgelegt werden. Hierbei ist es möglich, die von den Bilddaten einer Bewegungsphase in der Datenbasis abgelegte Information durch Korrelation (insbesondere Mittelung) einer Vielzahl von Bilddaten dieser Bewegungsphase zu ermitteln. Nach der Erzeugung dieser Datenbasis werden die Information aus den aktuellen Bilddaten dann mit den in der Datenbasis zu den Bewegungsphasen gespeicherten Daten verglichen und es wird diejenige Position als aktuelle Position bestimmt, die der Bewegungsphase zugeordnet ist, deren Information mit der aktuell mit den Bilddaten ermittelten Information am ähnlichsten ist.

Neben aus den Bilddaten der einzelnen Bewegungsphasen abgeleiteten Informationen zur Bestimmung der aktuellen Position wenigstens eines beweglichen Maschinenelementes umfasst die Datenbasis vorteilhaft auch Informationen über den dynamischen Zusammenhang dieser Vielzahl von Bewegungsphasen eines Bewegungsablaufes. Aus der Datenbasis ist dann anhand der aktuellen Bewegungsphase nicht nur entnehmbar, welche Bewegungsphasen nachfolgen, Sondern auch in welchem zeitlichen Abstand der Wechsel zwischen den einzelnen Bewegungsphasen erfolgt.

Eine von vielen denkbaren, vorteilhaften Möglichkeiten, um die aktuelle Position eines beweglichen Maschinenelementen zu ermitteln, besteht darin, die aktuell erfassten Bilddaten mittels Template-Matching mit in der Datenbasis abgelegten Bilddaten zu korrelieren. Hierbei wird diejenige Position des beweglichen Maschinenelementes als die aktuelle Position bestimmt, die derjenigen Bewegungsphase zugeordnet ist, deren abgespeichertes Bild mittels des Template-Matching als am ähnlichsten mit den aktuell erfassten Bilddaten identifiziert wurde.

Bei einer weiteren Vorgehensweise werden beim Erstellen der Datenbasis während der Trainingsphase die mittels des Bilderfassungssystems erfassten Bilddaten einer Transformation unterzogen und in dieser Form abgelegt und zur späteren Korrelation mit den aktuell erfasste Bilddaten, nach einer entsprechenden Transformation, herangezogen. In besonders vorteilhafter Weise eignet sich hierbei die Hauptachsentransformation, da sich hierdurch die in der Datenbasis abzulegende bzw. die zu korrelierende Datenmenge signifikant reduzieren lässt. Auch hier wird diejenige Position des beweglichen Maschinenelementes als aktuelle Position bestimmt, die derjenigen Bewegungsphase zugeordnet ist, deren transformierte Bilddaten als am ähnlichsten mit der Transformation der aktuell erfassten Bilddaten identifiziert wurden. Es kann der einer Bewegungsphase zugeordnete Ort innerhalb des multidimensionalen Raumes innerhalb der Trainingsphase, insbesondere durch Mittelung, aus einer Vielzahl von Abbildungen oder Transformationen dieser Abbildungen der jeweiligen Bewegungsphase bestimmt werden.

Um einen Ähnlichkeitsoperator in dem multidimensionalen Raum am vorteilhaftesten anzuwenden, bietet es sich an, die Abfolge der Bewegungsphasen durch eine Bahn durch die diesen jeweilig zugeordneten Punkte im mehrdimensionalen Raum abzubilden. Die transformierten aktuellen Bilddaten werden dann dieser Bewegungsphase eines bewegten Maschinenelementes zugeordnet, deren Ort im multidimensionalen Raum entlang der Bahn dem aktuell berechneten Ort am nächsten liegt.

Die zukünftige, innerhalb der Anhaltezeit erreichbare Position der beweglichen Maschinenelemente kann am besten ausgehend vom Ort der als aktuell bestimmten Bewegungsphase ermittelt werden, indem der weitere Lauf der Bahn im multidimensionalen Raum betrachtet wird.

Wie weit sich ein Maschinenelement bei einer Abschaltung noch bewegen wird, kann beispielsweise aus a priori Wissen über deren physikalischen Eigenschaften abgeleitet werden. Andererseits ist es aber auch möglich, innerhalb der Trainingsphase des Systems dieses Verhalten im Abschaltungsfall experimentell, ausgehend von einer Vielzahl zuvor bereits mittels Bilddaten erfassten Bewegungsphasen, zu ermitteln.

Ausgehend von der ermittelten aktuellen Position des beweglichen Maschinenelements, sowie in Kenntnis der zukünftig erreichbaren Position kann der einem beweglichen Maschinenteil zuzuordnende Sicherheitsbereichs festgelegt werden. Hierzu werden in vorteilhafter Weise alle während der Anhaltezeit durchlaufenen Positionen der Maschinenelemente bestimmt. Ausgehend hiervon werden diese Positionen um einen Bereich erweitert, dessen Dimension durch eine Strecke definiert wird, welche ein im Umfeld des beweglichen Maschinenelementes potentiell befindliches oder detektiertes Objekt innerhalb der Anhaltezeit zurücklegen kann. So ist beispielsweise bei der Detektion einer Person im Umfeld klar, dass diese sich nicht sprungartig bewegen wird; auch sind maximale Geschwindigkeiten und Beschleunigungen von Personen gut bekannt und ggf. aus einer zusätzlich erfolgenden Bewegungsanalyse aktuell auch sehr gut hinsichtlich ihrer Richtung abschätzbar.

Besonders einfach und gewinnbringend ist es, den wenigstens einen Sicherheitsbereich dadurch zu dimensionieren, dass die für den Bewegungsablauf während der Anhaltezeit bestimmten Positionen nach allen Seiten hin erweitert werden.

Zur Detektion eines Objektes, insbesondere einer Person, in einen der Sicherheitsbereiche sind eine Vielzahl unterschiedlichster Sensoren, insbesondere aber Lidar-, Radar- oder Ultraschallsensoren geeignet. In besonders vorteilhafter Weise kann hierzu ein Kamerasensor eingesetzt werden. Auf diese Weise kann beispielsweise das zur Erfassung des Bewegungsablaufes eines beweglichen Maschinenelementes dienende Bilderfassungssystem gleichzeitig auch zur Detektion des Eintritts eines Objekts in wenigstens einen der Sicherheitsbereiche dienen.

Nach der allgemeinen Definition findet eine Kollision zwischen zwei Objekten dann statt, wenn diese sich zur gleichen Zeit im gleichen Raumbereich befinden. Deshalb lässt sich eine Kollisionsbestimmung sehr einfach dadurch realisieren, dass die Schnittmenge bzgl. der von dem Maschinenelement und dem Objekt beanspruchten Raum bestimmt wird; existiert eine derartige Schnittmenge, tritt eine Kollision auf.

In besonders vorteilhafter Weise eignet sich zur Kollisionsbestimmung eine in 3D-Daten mit Bewegungsinformation umgerechnete Sensorinformation, entsprechend den Arbeiten von Franke et al. (U. Franke, C. Rabe, H. Bardino, S. Gehrig; 6D-Vision: Fusion of Stereo and Motion for Robust Environment Perception, in Walter.G. Kropatsch, Robert Sablatnig, Allan Hanbury (Eds.): Pattern Recognition, 27th DAGM Symposium, Wien, Österreich, August 31 - September 2, 2005, Proceedings. Lecture Notes in Computer Science 3663 Springer 2005, pp. 216-223). Hierbei ist jedem 3D-Punkt ein Kalman-Filter zugeordnet, das dessen Bewegung voraussagt. Führen die vorhergesagten Bahnen einer genügend hohen Anzahl von 3D-Punkten durch den vordefinierten Sicherheitsbereich, so droht eine Kollision.

Wird nun durch den detektierten Eintritt eines Objektes in wenigstens einen der Sicherheitsbereiche eine Kollisionsgefahr erkannt, wird auf die Steuerung der Maschine und/oder des beweglichen Maschinenelementes eingewirkt, um das Maschinenelement in seinem dynamischen Bewegungsverhalten zu beeinflussen. Im einfachsten Fall resultiert diese Beeinflussung in der Abschaltung der Bewegung des beweglichen Maschinenelements. Da jedoch die Entscheidung über eine Kollision rein binär ist, führt eine Abschaltung in kritischen Fällen unter Umständen zu einer ruckartigen Bewegungsweise des Maschinenelementes, insbesondere dann wenn sich beispielsweise eine Person vor der Maschine bewegt. Dies belastet zum einen die Mechanik der Maschine und führt zum anderen dazu, dass dessen Verhalten für eine Person in dessen Nähe nur schwierig nachvollziehbar ist.

Bevorzugt ist es deshalb, bei einer möglichen Kollision zunächst die Bewegungsgeschwindigkeit des bewegten Maschinenelementes zu verändern, insbesondere zu verlangsamen; dies umso mehr, je wahrscheinlicher es zu einer Kollision kommen könnte. Hierzu bietet es sich an, dass die Änderung der Geschwindigkeit proportional zu der Schätzwahrscheinlichkeit einer bevorstehenden Kollision erfolgt. Hierbei erfolgt diese Schätzung der Kollisionswahrscheinlichkeit nach Detektion des Eintritts eines Objektes in einen Sicherheitsbereiche der Maschine und beschreibt diejenige Wahrscheinlichkeit, mit welcher ein bewegliches Maschinenelement im weiteren Zeitverlauf tatsächlich mit dem im Sicherheitsbereich befindlichen Objekt kollidiert.

Da alle zur Schätzung der Kollisionswahrscheinlichkeit relevanten Größen Messfehlern unterworfen sind, ist es bevorzugt, wenn diesen Größen Wahrscheinlichkeitsdichten zugewiesen werden. Ein derartiges Verfahren resultiert in relativ kleinen Schutzbereichen, da Messungen in den weniger wahrscheinlichen Bereichen um die Maschine nur zu einer Geschwindigkeitsreduktion führen, aber nicht zu einer kompletten Abschaltung.

In besonders vorteilhafter Weise wird zur Schätzung der Kollisionswahrscheinlichkeit der von dem beweglichen Maschinenelement während der Abschaltzeit überstrichene Raum einer Quantisierung unterzogen wird, wobei für jedes Quantisierungselement eine individuelle Wahrscheinlichkeit für eine Kollision bestimmt wird. Dann wird aus der Summe der individuellen Wahrscheinlichkeiten über alle Elemente die eigentliche Kollisionswahrscheinlichkeit abgeleitet.

Bei einer weiteren Variante zur Schätzung der Kollisionswahrscheinlichkeit werden allen relevanten Komponenten Wahrscheinlichkeitsdichtefunktionen zugewiesen und diese Wahrscheinlichkeitsdichtefunktionen werden nach der Regel von Bayes miteinander verknüpft. Hierzu werden bevorzugt die a priori Wahrscheinlichkeiten eines beweglichen Maschinenelementes vorgegeben oder auf Basis der Bilddaten einer Trainingsvideosequenz approximiert.

## Patentansprüche

1. Verfahren zur kollisionsfreien Interaktion zwischen einer Maschine mit zumindest einem beweglichen Maschinenelement und einem Objekt, das sich im Umfeld des beweglichen Maschinenelements befindet, wobei in Kenntnis einer aktuellen Position und eines dynamischen Verhaltens des beweglichen Maschinenelements und in Kenntnis einer Anhaltezeitdauer bis zum Stillstand des Maschinenelements eine zukünftige, innerhalb der Anhaltezeitdauer erreichbare Position des Maschinenelements geschätzt wird, wobei zumindest ein Sicherheitsbereich um das Maschinenelement in Abhängigkeit von der geschätzten erreichbaren Position festgelegt wird, wobei mittels Sensordaten von Objektsensoren der Eintritt eines Objekts in den Sicherheitsbereich detektiert wird, und wobei auf die Steuerung des Maschinenelements eingewirkt wird, um das Maschinenelement in seinem dynamischen Bewegungsverhalten zu beeinflussen, wenn ein Objekteintritt in dem Sicherheitsbereich detektiert wird, **dadurch gekennzeichnet, dass** Bilddaten des Maschinenelements mittels eines Bilderfassungssystems erfasst werden, und dass die erfassten Bilddaten mit den Daten einer auf Grundlage von Bilddaten erstellten Datenbasis korreliert werden, wobei die Datenbasis Bilddaten zu einer Vielzahl von Bewegungsphasen innerhalb des Bewegungsablaufs des Maschinenelements beinhaltet, und wobei in Abhängigkeit von dieser Datenbasis sowohl die aktuelle Position des Maschinenelements als auch die innerhalb der Anhaltezeit erreichbare Position geschätzt wird.

2. Verfahren nach Patenanspruch 1, **dadurch gekennzeichnet, dass** die Bilddaten mittels eines multiokularen Kamerasystems erfasst werden.

3. Verfahren nach einem der vorhergehenden Patentansprüche, **dadurch gekennzeichnet, dass** die aktuelle Position des Maschinenelements bestimmt wird, indem aktuell erfasste Bilddaten mit in der Datenbasis abgelegten Bilddaten korreliert werden, wobei diejenige Position des beweglichen Maschinenelements als die aktuelle Position bestimmt wird, die derjenigen Bewegungsphase zugeordnet ist, deren abgespeichertes Bild als am ähnlichsten mit den aktuell erfassten Bilddaten identifiziert wurde.

4. Verfahren nach einem der Patentansprüche 1 bis 3, **dadurch gekennzeichnet, dass** zur Ermittlung der aktuellen Position des Maschinenelements aktuell erfasste Bilddaten einer Transformation, insbesondere einer Hauptachsen-Transformation, unterzogen werden, und mit den in der Datenbasis abgelegten Daten korreliert werden, wobei diejenige Position des beweglichen Maschinenelementes als die aktuelle Position bestimmt wird, die derjenigen Bewegungsphase entspricht, deren Abbildung im transformierten Koordinatensystem entlang einer den Bewegungsablauf des Maschinenelementes beschreibenden Bahn am besten mit der Transformation der aktuell erfassten Bilddaten übereinstimmt.

5. Verfahren nach Patentanspruch 4, **dadurch gekennzeichnet, dass** die zukünftige, innerhalb der Anhaltezeit erreichte Position des Maschinenelements ausgehend von der als aktuell bestimmten Position unter Rückgriff auf die den Bewegungsablauf des Maschinenelementes beschreibenden Bahn im transformierten Koordinatensystem geschätzt wird.

6. Verfahren nach einem der vorhergehenden Patentansprüche, **dadurch gekennzeichnet, dass** der Sicherheitsbereich **dadurch** festgelegt wird, dass auf Grundlage der Datenbasis eine Vielzahl von während der Anhaltezeit erreichbaren Positionen des Maschinenelements bestimmt werden, und dass die Vielzahl der erreichbaren Positionen um einen Bereich erweitert wird, vorzugsweise in Abhängigkeit davon, welche Strecke ein im Umfeld des beweglichen Maschinenelementes detektiertes Objekt innerhalb der Anhaltezeit zurücklegen kann.

7. Verfahren nach Patenanspruch 6, **dadurch gekennzeichnet, dass** zur Festlegung des Sicherheitsbereichs die bestimmten Positionen nach allen Seiten hin erweitert werden.

8. Verfahren nach einem der vorhergehenden Patentansprüche, **dadurch gekennzeichnet, dass** die Sensordaten zur Detektion des Eintritts eines Objektes in wenigstens einen der Sicherheitsbereiche mittels wenigstens eines Kamerasensors gewonnen werden.

9. Verfahren nach Patentanspruch 8, **dadurch gekennzeichnet, dass** die Sensordaten zur Detektion eines Eintritts in 3D-Daten mit Bewegungsinformation umgerechnet werden.

10. Verfahren nach einem der vorhergehenden Patentansprüche, **dadurch gekennzeichnet, dass** die Beeinflussung des dynamischen Bewegungsverhaltens ein Abschalten der Bewegung des Maschinenelements beinhaltet.

11. Verfahren nach einem der vorhergehenden Patentansprüche, **dadurch gekennzeichnet, dass** die Beeinflussung des dynamischen Bewegungsverhaltens des Maschinenelements eine Änderung der Geschwindigkeit der Bewegung des Maschinenelements beinhaltet.

12. Verfahren nach Patentanspruch 11, **dadurch gekennzeichnet, dass** die Änderung der Geschwindigkeit korreliert, insbesondere proportional, zu einer geschätzten Kollisionswahrscheinlichkeit erfolgt, wobei diese Schätzung nach Detektion des Eintritts des Objektes in den Sicherheitsbereich erfolgt, und wobei die Kollisionswahrscheinlichkeit diejenige Wahrscheinlichkeit beschreibt, mit welcher das Maschinenelement im weiteren Zeitverlauf tatsächlich mit dem im Sicherheitsbereich befindlichen Objekt kollidiert.

13. Verfahren nach Patentanspruch 12, **dadurch gekennzeichnet, dass** der von dem beweglichen Maschinenelement überstrichene Raum einer Quantisierung unterzogen wird, wobei für jedes Quantisierungselement eine individuelle Wahrscheinlichkeit für eine Kollision bestimmt wird, und dass aus der Summe der individuellen Wahrscheinlichkeiten über alle Elemente die eigentliche Kollisionswahrscheinlichkeit abgeleitet wird.

14. Vorrichtung zur kollisionsfreien Interaktion zwischen einer Maschine mit zumindest einem beweglichen Maschinenelement und einem Objekt, das sich im Umfeld des beweglichen Maschinenelements befindet, mit ersten Mitteln zur Bestimmung einer aktuellen Position und eines dynamischen Verhaltens des beweglichen Maschinenelements, mit zweiten Mitteln, um ausgehend von der aktuellen Position und in Kenntnis einer Anhaltezeitdauer von einer Abschaltung bis zum Stillstand des beweglichen Maschinenelementes eine zukünftige, innerhalb der Anhaltezeitdauer erreichbare Position des beweglichen Maschinenelements zu schätzen, mit dritten Mitteln zum Bestimmen von zumindest einem Sicherheitsbereich in Abhängigkeit von der geschätzten erreichbaren Position, mindestens einem Sensor zur Detektion des Eintritts eines Objektes in den Sicherheitsbereich, und mit vierten Mitteln, um bei Detektion eines Eintritts des Objektes in den Sicherheitsbereich auf das Maschinenelement einzuwirken, um das Maschinenelement in seinem dynamischen Bewegungsverhalten zu beeinflussen, **gekennzeichnet durch** ein Bilderfassungsmittel zur Erfassung von Bilddaten des beweglichen Maschinenelements, eine Datenbasis, und ein Vergleichsmittel, um die erfassten Bilddaten mit Daten der Datenbasis zu korrelieren, wobei die Datenbasis Bilddaten zu einer Vielzahl von Bewegungsphasen innerhalb des Bewegungsablaufes des Maschinenelements beinhaltet, und wobei das Vergleichsmittel dazu ausgebildet ist, sowohl die aktuelle Position des Maschinenelements als auch eine zukünftige, innerhalb der Anhaltezeit erreichbare Position des Maschinenelements zu schätzen.

## Claims

1. A method for collision-free interaction between a machine having at least one mobile machine element and an object in the vicinity of the mobile machine element, wherein a future position of the machine element, reachable within a stopping time before the machine element is at rest, is estimated using knowledge of a current position and a dynamic behavior of the mobile machine element and using knowledge of the stopping time, wherein at least one safety region around the machine element is established as a function of the estimated reachable position, wherein an entry of an object into the safety region is detected by means of sensor data from object sensors, and wherein the drive of the machine element is controlled in order to modify the dynamic movement behavior of the machine element when object entry into the safety region is detected, **characterized in that** image data of the machine element are recorded by means of an image acquisition system, and the recorded image data are correlated with the data of a database compiled on the basis of image data, the database containing image data relating to a plurality of movement phases within the movement process of the machine element, and both the current position of the machine element and the position reachable within the stopping time are estimated as a function of this database.

2. The method according to claim 1, **characterized in that** the image data are recorded by means of a multi-ocular camera system.

3. The method according to one of the preceding claims, **characterized in that** the current position of the machine element is determined by correlating currently recorded image data with image data stored in the database, wherein the current position is determined as that position of the mobile machine element which position is allocated to a movement phase whose stored image has been identified as most similar to the currently recorded image data.

4. The method according to one of claims 1 to 3, **characterized in that** currently recorded image data are subjected to a transformation, in particular a principal axis transformation, and are correlated with the data stored in the database in order to determine the current position of the machine element, wherein the current position of the mobile machine element is determined as that position which corresponds to a movement phase whose mapping in the transformed coordinate system along a path described by the movement process of the machine element coincides best with the transformation of the currently recorded image data.

5. The method according to claim 4, **characterized in that** the future position of the machine element, reached within a stopping time starting from the currently determined position, is estimated by employing the path describing the movement process of the machine element in the transformed coordinate system.

6. The method according to one of the preceding claims, **characterized in that** the safety region is established by determining a plurality of positions of the machine element reachable during the stopping time on the basis of the database, and the plurality of reachable positions is expanded by a region, preferably as a function of the distance which an object detected in the vicinity of the mobile machine element can travel within the stopping time.

7. The method according to claim 6, **characterized in that** the determined positions are expanded on all sides in order to establish the safety region.

8. The method according to one of the preceding claims, **characterized in that** the sensor data for detecting entry of an object into at least one of the safety regions are obtained by means of at least one camera sensor.

9. The method according to claim 8, **characterized in that** the sensor data are converted into 3D data including movement information in order to detect entry.

10. The method according to one of the preceding claims, **characterized in that** the modification of the dynamic movement behavior comprises stopping the movement of the machine element.

11. The method according to one of the preceding claims, **characterized in that** the modification of the dynamic movement behavior comprises a change in the speed of movement of the machine element.

12. The method according to claim 11, **characterized in that** the change of speed is carried out in a correlated fashion, in particular proportionally with an estimated collision probability, with this estimation being carried out after detection of entry of the object into the safety region, and the collision probability describing the probability with which the machine element will actually collide subsequently with the object lying in the safety region.

13. The method according to Claim 12, **characterized in that** the space passed through by the mobile machine element is subjected to quantization; an individual probability of a collision being determined for each quantization element, and the actual collision probability is derived from the sum of the individual probabilities over all elements.

14. A device for the collision-free interaction between a machine having at least one mobile machine element and an object in the vicinity of the mobile machine element, the device comprising a first unit for determining a current position and a dynamic behavior of the mobile machine element, comprising a second unit for estimating a future position of the machine element, reachable within a stopping time before the machine element is at rest, on the basis of the current position and using knowledge of a stopping time from shutdown of the mobile machine element until it is at rest, comprising a third unit for determining at least one safety region as a function of the estimated reachable position, comprising at least one sensor for detecting entry of an object into the safety region, and comprising a fourth unit for controlling the machine element when entry of the object into the safety region is detected, in order to modify the dynamic movement behavior of the machine element, **characterized by** an image acquisition unit for recording image data of the mobile machine element, a database, and a comparator unit for correlating the recorded image data with data of the database, the database containing image data relating to a plurality of movement phases within the movement process of the machine element, and the comparator unit being designed to estimate both the current position of the machine element and a future position of the machine element reachable within the stopping time.

## Revendications

1. Procédé pour une interaction exempte de collision entre une machine comportant au moins un élément de machine mobile et un objet se trouvant dans l'environnement de l'élément de machine mobile, où, en connaissance d'une position actuelle et d'un comportement dynamique de l'élément de machine mobile, et en connaissance d'une durée d'arrêt jusqu'à l'immobilisation de l'élément de machine, une position future de l'élément de machine pouvant être atteinte pendant la durée d'arrêt est estimée, où au moins une plage de sécurité autour de l'élément de machine est définie en fonction de la position estimée pouvant être atteinte, où la pénétration d'un objet dans la plage de sécurité est détectée au moyen de données de capteurs d'objet, et où il est agi sur la commande de l'élément de machine pour influencer le comportement de déplacement dynamique de l'élément de machine lorsqu'une pénétration d'objet dans la plage de sécurité est détectée;
**caractérisé en ce que** des données d'image de l'élément de machine sont saisies au moyen d'un système de saisie d'image, et **en ce que** les données d'image saisies sont corrélées aux données d'une base de données créée à partir de données d'image, la base de données contenant des données d'image relatives à une pluralité de phases de mouvement en cours de déplacement de l'élément de machine, et la position actuelle de l'élément de machine ainsi que la position pouvant être atteinte pendant la durée d'arrêt étant estimées en fonction de ladite base de données.

2. Procédé selon la revendication 1, **caractérisé en ce que** les données d'image sont saisies au moyen d'un système de caméra multioculaire.

3. Procédé selon l'une des revendications précédentes,
**caractérisé en ce que** la position actuelle de l'élément de machine est déterminée par corrélation de données d'image actuellement saisies aux données d'image stockées dans la base de données, la position de l'élément de machine mobile correspondant à la phase de mouvement dont l'image mémorisée a été identifiée comme la plus proche des données d'image actuellement saisies étant déterminée comme position actuelle.

4. Procédé selon l'une des revendications 1 à 3, **caractérisé en ce que**, pour la détermination de position actuelle de l'élément de machine, des données d'image actuellement saisies sont soumises à une transformation, en particulier à une transformation des axes principaux, et corrélées aux données stockées dans la base de données, la position de l'élément de machine mobile déterminée comme position actuelle étant celle correspondant à la phase de mouvement dont la représentation dans le système de coordonnées transformé le long d'une voie décrivant le déplacement de l'élément de machine correspond le mieux à la transformation des données d'image actuellement saisies.

5. Procédé selon la revendication 4, **caractérisé en ce que** la position future de l'élément de machine atteinte pendant la durée d'arrêt est estimée à partir de la position déterminée comme actuelle, en tenant compte de la voie décrivant le déplacement de l'élément de machine dans le système de coordonnées transformé.

6. Procédé selon l'une des revendications précédentes,
**caractérisé en ce que** la plage de sécurité est définie **en ce qu'**une pluralité de positions de l'élément de machine pouvant être atteintes pendant la durée d'arrêt est déterminée à partir de la base données, et **en ce que** la pluralité des positions pouvant être atteintes est étendue d'une plage, préférentiellement en fonction du trajet qu'un objet détecté dans l'environnement de l'élément de machine mobile peut parcourir pendant la durée d'arrêt.

7. Procédé selon la revendication 6, **caractérisé en ce que**,
pour la définition de la plage de sécurité, les positions déterminées sont étendues sur tous les côtés.

8. Procédé selon l'une des revendications précédentes,
**caractérisé en ce que** les données de capteurs pour la détection de la pénétration d'un objet dans au moins une des plages de sécurité sont obtenues au moyen d'au moins un capteur de caméra.

9. Procédé selon la revendication 8, **caractérisé en ce que** les données de capteurs pour la détection d'une pénétration sont converties en données tridimensionnelles avec une information de déplacement.

10. Procédé selon l'une des revendications précédentes,
**caractérisé en ce que** l'action sur le comportement de déplacement dynamique inclut un arrêt du déplacement de l'élément de machine.

11. Procédé selon l'une des revendications précédentes,
**caractérisé en ce que** l'action sur le comportement de déplacement dynamique inclut une variation de la vitesse de déplacement de l'élément de machine.

12. Procédé selon la revendication 11, **caractérisé en ce que** la variation de vitesse est exécutée en corrélation, en particulier proportionnellement à une probabilité de collision estimée, ladite estimation étant effectuée après détection de la pénétration de l'objet dans la plage de sécurité, et la probabilité de collision décrivant la probabilité suivant laquelle l'élément de machine entre effectivement en collision par la suite avec l'objet se trouvant dans la plage de sécurité.

13. Procédé selon la revendication 12, **caractérisé en ce que** l'espace balayé par l'élément de machine mobile est soumis à une quantification, une probabilité de collision individuelle étant déterminée pour chaque élément de quantification, et **en ce que** la probabilité de collision proprement dite est déduite de la somme des probabilités individuelles pour tous les éléments.

14. Dispositif pour une interaction exempte de collision entre une machine comportant au moins un élément de machine mobile et un objet se trouvant dans l'environnement de l'élément de machine mobile, avec de premiers moyens pour la détermination d'une position actuelle et d'un comportement dynamique de l'élément de machine mobile, avec de seconds moyens pour estimer, à partir de la position actuelle et en connaissance d'une durée d'arrêt entre une désactivation et l'immobilisation de l'élément de machine mobile, une position future de l'élément de machine mobile pouvant être atteinte pendant la durée d'arrêt, avec de troisièmes moyens pour définir au moins une plage de sécurité en fonction de la position estimée pouvant être atteinte, au moins un capteur pour la détection de la pénétration d'un objet dans la plage de sécurité, et avec de quatrième moyens pour agir sur l'élément de machine afin d'influencer le comportement de déplacement dynamique de l'élément de machine en cas de détection d'une pénétration d'objet dans la plage de sécurité, **caractérisé par** un moyen de saisie de données d'image de l'élément de machine mobile, une base de données, et un moyen de comparaison pour corréler les données d'image saisies à des données de la base de données, la base de données contenant des données d'image relatives à une pluralité de phases de mouvement en cours de déplacement de l'élément de machine, et le moyen de comparaison étant réalisé pour estimer la position actuelle de l'élément de machine ainsi qu'une position future de l'élément de machine pouvant être atteinte pendant la durée d'arrêt.
